# EUROPEAN PATENT APPLICATION

(11) **EP 2 881 160 A1**
(43) Date of publication of application: **10.06.2015**
(21) Application number: 13196146.8
(22) Date of filing: 09.12.2013
(51) Int. Cl.: B01D 53/04, B01D 53/86

(54) **Method and device for regenerating VOC filter**

(71) Applicant: Koninklijke Philips N.V., 5656 AE Eindhoven (NL)
(72) Inventor: The designation of the inventor has not yet been filed
(74) Representative: Niessen, Eduard Matheus Johannes

(57) **Abstract**

The present invention relates to a method and a device for regenerating a VOC filter. The method comprises steps of: arranging the VOC filter in an air-tight space; and decomposing VOCs adsorbed by the VOC filter by photocatalytic oxidation. The method and the device can be used to improve the regenerating; all the VOCs and formaldehyde absorbed onto the VOC removal filter will be completely decomposed to CO₂ and H₂O before the atmosphere inside the device is released to the indoor environment.

## Description

### FIELD OF THE INVENTION

The invention relates to a method and a device for regenerating an air purification filter, in particular, to a method and a device for regenerating a VOC (volatile organic compounds) filter. The invention further relates to an air purifier comprising the device for regenerating a VOC filter.

### BACKGROUND OF THE INVENTION

Indoor air quality has received increasing attention since the early 1990s, partially due to the studies showing that the level of pollutants in indoor environment is actually higher than in outdoor environment. In addition, people generally spend more than 80% of their time in indoor, which contributes a higher risk from inhalation of pollutants than outdoors. Three categories of pollutants have been identified as the main indoor pollutants: particulate matters, gas pollutants, and biological matters.

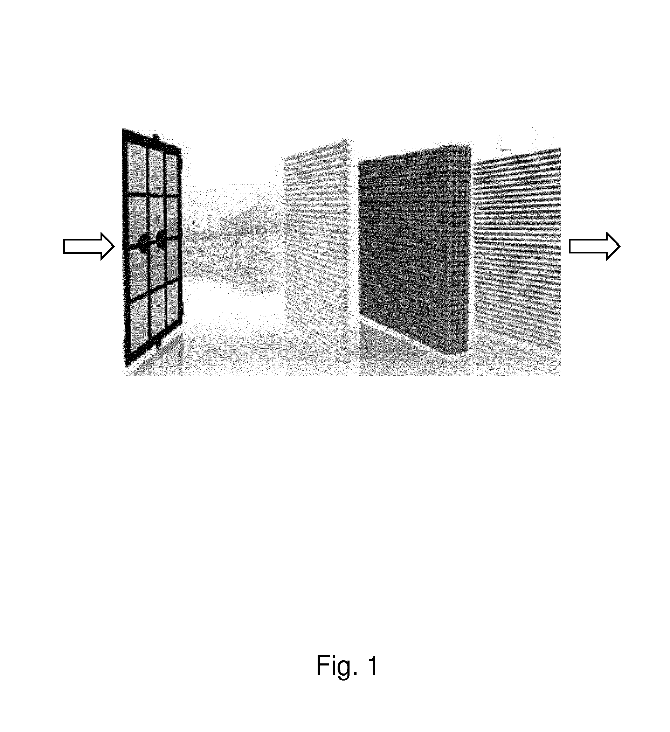

Common methods of ensuring indoor air quality include controlling pollution sources, increasing the air exchange rate and using air purifiers. The use of air purifiers becomes more popular to eliminate indoor air pollutants. Traditional air purifiers use filters to remove particulate matters or sorption materials (e.g., granular activated carbon) to adsorb gases or odors. Usually, the air purifier is composed of a series of filters, e.g. a pre-filter to remove large particles, a HEPA filter to remove fine particles, and an activated carbon filter to remove VOC and formaldehyde. Main filters integrated into an air purifier are illustrated in Fig. 1. The polluted air passes through the filters in sequence, and the contaminants are removed and thus the clean air is generated.

Activated carbon filter is currently the dominant filter on the market to remove gas pollutants. The advantage of activated carbon filter includes relatively cheap materials, no by-products, and good gas removal performance. However, activated carbon filter has very limited lifetime. For a 200 g activated carbon filter, the lifetime could be as short as two weeks. When the filter is saturated with VOC, continuing use of the filter could result in desorption of the pollutants back to the environment. Replacement of the filter is costly to consumer.

To prolong the lifetime of activated carbon filter, one method is to modify the activated carbon with photocatalytic catalyst e.g. TiO₂. When the catalysts modified filter is saturated with pollutants, the filter can be regenerated by exposure to light for a required period. After the regeneration, filter regains the absorption capability and is able to remove the pollutants from the air again.

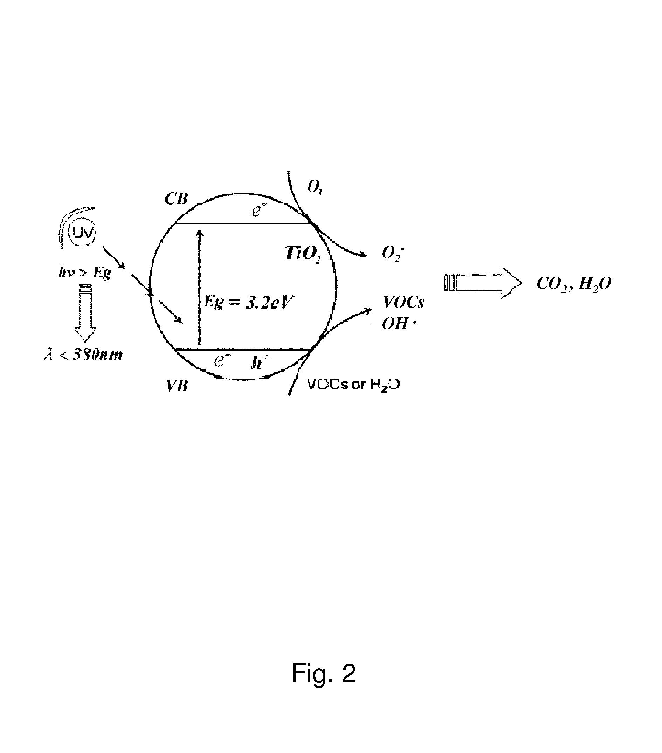

The principle of photocatalytic oxidation (PCO) is illustrated in Fig 2. PCO commonly uses semiconductor catalysts and ultraviolet (UV) light to decompose organic compounds into benign and odorless constituents - water vapor (H₂O) and carbon dioxide (CO₂). When the photocatalyst is irradiated by light, electron in the valence band (VB) is excited to a vacant conduction band (CB), producing a positive hole (h⁺) in the VB. The activation equation can be written as:

TiO₂ + hν → h⁺ + e⁻.

The positive holes (h⁺) and electrons (e⁻) are powerful oxidizing and reducing agents, respectively. They efficiently produce OH· (hydroxyl radical) and O₂⁻ through the following reactions:

Oxidation reaction: h⁺ + OH⁻ → OR·;

Reduction reaction: e⁻ + O_{2ads} → O⁻_{2ads}.

OH· is a very powerful oxidizing species. It is derived from the oxidation of adsorbed water or adsorbed OH⁻. When OH· encounters organic pollutant, the degradation reaction takes place:

OH· + VOC + O₂ → nCO₂ + mH₂O.

Currently, there are two methods to regenerate the above mentioned filter: basked under the natural sunlight and illuminated by a light source installed in air purifier. However, both methods have serious shortcomings. The first method is obviously restrained by the availability and accessibility to the natural sunlight. In a cloudy day or raining day, it would be almost impossible to regenerate. The method also requires outdoor space for the regeneration, owing to the release of incomplete oxidation byproducts, which often are toxic. The second method, though avoid the above disadvantages, has its own shortcomings. For instance, the method will inevitably generate harmful byproducts due to incomplete oxidation. Also, the method requires spacial consideration for the installment of lighting source.

### SUMMARY OF THE INVENTION

It might be advantageous to provide a method and a device for regenerating the VOC filter to overcome the disadvantages of current regeneration methods. A method and a device are proposed, which can enhance the capability of regenerating the VOC filter effectively without secondary pollution.

For this purpose, according to an aspect of the invention, an embodiment of the invention provides a method for regenerating a VOC filter, the method comprising steps of: arranging the VOC filter in an air-tight space; and decomposing VOCs adsorbed by the VOC filter by photocatalytic oxidation.

By decomposing VOCs in an air-tight space, the contamination of incomplete oxidation products is avoided. All the VOCs and formaldehyde absorbed onto the VOC removal filter will be completely decomposed to CO₂ and H₂O before the atmosphere inside the air-tight space is released to the indoor environment.

Preferably, the decomposing step comprising: decomposing the VOCs adsorbed by the VOC filter in presence of photocatalyst provided in the air-tight space, the photocatalyst being independent of the VOC filter.

According to another embodiment of the invention, the method further comprises a step of: releasing the VOCs adsorbed by the VOC filter into the air-tight space; the decomposing step comprises: decomposing the released VOCs by photocatalytic oxidation.

Preferably, the method further comprises vibrating the filter during the decomposing step.

Preferably, the vibrating step comprises: vibrating the filter with an ultrasonic source at a frequency higher than 16 kHz.

Preferably, the releasing step comprises: heating the VOC filter to release the absorbed VOCs.

According to yet another embodiment of the invention, the method further comprises steps of: detecting concentration of VOCs within the air-tight space during the decomposing step; and stopping the decomposing step if the detected concentration is lower than a preset concentration threshold.

According to still another embodiment of the invention, the method further comprises a step of: obtaining property of a photocatalyst used in the photocatalytic oxidation; configuring a light source according to the obtained property of the catalyst.

Preferably, the air-tight space is provided with air.

In a preferred embodiment of the invention, the method further comprising: providing reflector on/at the inner wall of the air-tight space, the reflector being able to reflect at least one of ultrasonic wave and light.

According to another aspect of the invention, an embodiment of the invention provides a device for regenerating a VOC filter, the device comprising: a container with an air-tight space for containing the VOC filter; a light source for irradiating absorbents of the VOC filter with light, and/or an ultrasonic source for irradiating absorbents of the VOC filter with ultrasonic, wherein the light and/or the ultrasonic enable(s) photocatalytic oxidation of photocatalyst provided on the absorbents; and a detector for detecting concentration of VOCs within the air-tight space.

By decomposing VOCs in an air-tight space, the contamination of incomplete oxidation products is avoided. All the VOCs and formaldehyde absorbed onto the VOC removal filter will be completely decomposed to CO₂ and H₂O before the atmosphere inside the air-tight space is released to the indoor environment. With such a configuration, a safe regeneration of the VOC filter can be achieved.

Preferably, photocatalyst is provided in the air-tight space, the photocatalyst being independent of the VOC filter.

Preferably, the device further comprises a vibrating unit for vibrating the absorbents of the VOC filter.

Preferably, the light is ultraviolet light.

Preferably, frequency of the ultrasonic is higher than 16 kHz.

In a preferred embodiment of the invention, the air-tight space is provided with air.

Preferably, a reflector is provided on/at the inner wall of the air-tight space, the reflector being able to reflect at least one of ultrasonic wave and light.

An air purifier comprising the device for regenerating a VOC filter according to any of the embodiments of the invention is also proposed, wherein the container comprises an air tight door, the air tight door is used to form airflow channel during operation of air filtration. With the advantageous mentioned above, such an air purifier can achieve regenerating a VOC filter without taking the VOC filter out of the air purifier, which means less complexity on the operation of the regeneration.

These and other aspects of the invention will be apparent from and elucidated with reference to the embodiments described hereinafter. However, the invention is not limited to these exemplary embodiments.

### BRIEF DESCRIPTION OF THE DRAWINGS

The present invention will now be described based on various embodiments with reference to the accompanying drawings, in which:
Fig. 1 illustrates main filters integrated into an air purifier;
Fig. 2 illustrates the principle of photocatalytic oxidation;
Fig. 3 shows a schematic diagram of a device according to an embodiment of the invention; and
Fig. 4 shows the outside structure of the device in Fig. 3.

### DETAILED DESCRIPTION OF THE INVENTION

Reference will now be made to embodiments of the disclosure, one or more examples of which are illustrated in the figures. The embodiments are provided by way of explanation of the disclosure, and are not meant as a limitation of the disclosure. For example, features illustrated or described as part of one embodiment may be used with another embodiment to yield still a further embodiment. It is intended that the disclosure encompass these and other modifications and variations as come within the scope and spirit of the disclosure.

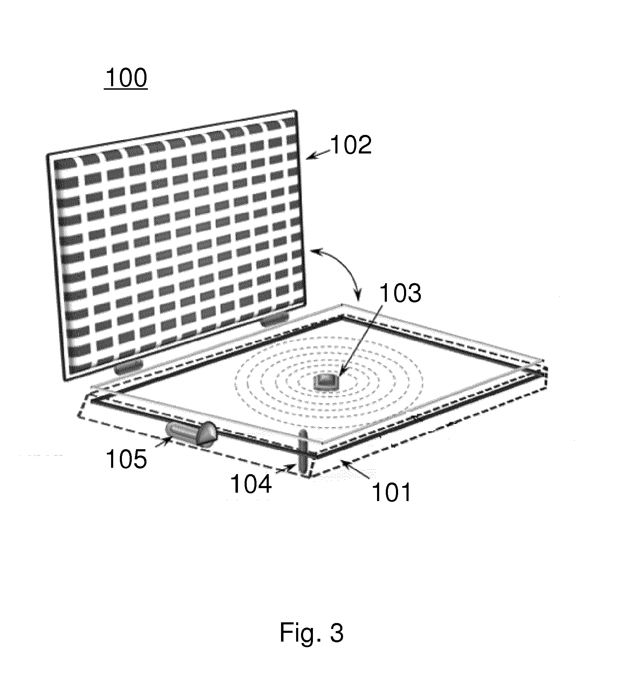

Fig. 3 shows a schematic diagram of a device according to an embodiment of the invention.

The device 100 comprises: a container 101 with an air-tight space for containing the VOC filter (not shown); a light source (an LED array) for irradiating absorbents of the VOC filter with light, and/or an ultrasonic source 103 for irradiating absorbents of the VOC filter with ultrasonic, wherein the light and/or the ultrasonic enable(s) photocatalytic oxidation of photocatalyst provided on the absorbents; and a detector 104 for detecting concentration of VOCs within the air-tight space.

According to the concept of the invention, an air tight regeneration device is used for the regeneration of air purification filter to avoid the contamination of incomplete oxidation products. All the VOCs and formaldehyde absorbed onto the VOC removal filter will be completely decomposed to CO₂ and H₂O before the atmosphere inside the device is released to the indoor environment.

A light source, preferably an OLED type of light source is used to generate the light, which can avoid the restrain of natural sunlight.

The VOC sensor is used to detect one/multiple chosen pollutant(s). The sensor monitors the regeneration progress by sensing the concentration change of pollutants. The VOC sensor also helps to ensure that all the VOCs and formaldehyde are completely decomposed to CO₂ and H₂O before the atmosphere inside the device is released to the indoor environment, such that the secondary pollution is avoided.

The ultrasonic source provides ultrasonic wave to the filter to create the vibration and assist photocatalytic oxidation. The ultrasonic improves the photocatalytic oxidation efficiency in two ways: on one hand, the mechanic waves vibrates the absorbents (such as granular activated carbon) and make all the absorbents receive the light; on the other hand, the ultrasonic is known to improve photocatalytic oxidation through synergistic effect, since to some extent, the ultrasonic phonon is strong enough for producing hydroxyl radicals. It should be noted that the mechanic waves also helps the releasing of the VOCs.

Preferably, photocatalyst is provided in the air-tight space, the photocatalyst being independent of the VOC filter. For example, a meshed structure coated with photocatalyst can be provided in the air-tight space, thus photocatalytic oxidation is achieved by irradiating the meshed structure. The meshed structure can be arranged in vicinity of the light source/ ultrasonic source, so as to utilize the light/ultrasonic. With such a configuration, there is no need for integrating photocatalyst onto the absorbents of the filter.

Though the VOCs absorbed onto the VOC filter can be released by irradiating the absorbents of the filter or the meshed structure with light and/or ultrasonic, optionally, a heating unit can also be provided in the air-tight space for assisting the releasing of the VOCs.

Preferably, the device further comprises a vibrating unit 105 for vibrating the absorbents of the VOC filter. As described above, the ultrasonic source can be used for vibrating or rotating the absorbents (such as granular activated carbon), a vibrating unit (e.g. with an operation frequency of 20 to 1000 Hz) can also be utilized for this purpose.

Preferably, the light is ultraviolet light. Ultraviolet light has higher energy than visible light, positive holes (h⁺) and electrons (e⁻) can thus be produced with a higher efficiency. Moreover, ultraviolet light can be used in concert with a variety of photocatalyst due to it's higher energy.

Preferably, frequency of the ultrasonic is higher than 16 kHz. The frequency of the ultrasonic can be chosen according to the power of the ultrasonic source and/or the mass of the absorbents. A frequency of the ultrasonic higher than 16 kHz ensures vibrating the absorbents and the synergistic effect.

In a preferred embodiment of the invention, the air-tight space is provided with air. In the context, "air" refers to the mixture of gases that forms the Earth's atmosphere, which contains oxygen (O₂) and moisture (H₂O) as well. As shown in Fig. 2, these compositions can help the formation of O₂⁻ and OH·.

Preferably, a reflector is provided on/at the inner wall of the air-tight space, the reflector being able to reflect at least one of ultrasonic wave and light. With such a configuration, the photocatalytic oxidation can take full advantage of the ultrasonic wave and/or the light.

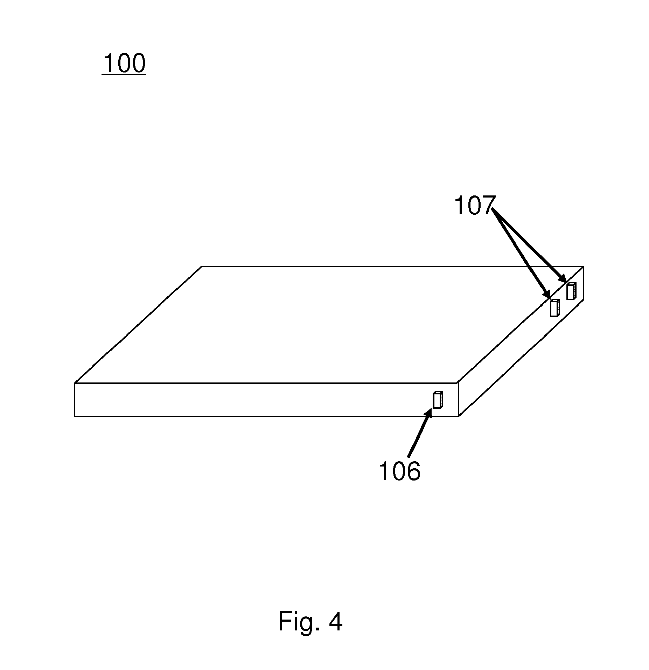

Fig. 4 shows the outside structure of the device in Fig. 3. The device has a flat shape, which matches the shape of a common VOC filter. A power button and a state indicator are provided at the outside of the device. After a VOC filter is put into the container and the device is closed, the power button can be pressed to switch on the device; when the state indicator changes from e.g. red to e.g. green, (which means the regeneration process is finished), the device can be switched off and reopened, and the VOC filter is ready for use. An embodiment of the invention provides a method for regenerating a VOC filter, the method comprising steps of: arranging the VOC filter in an air-tight space; and decomposing VOCs adsorbed by the VOC filter by photocatalytic oxidation.

By decomposing VOCs in an air-tight space, the contamination of incomplete oxidation products is avoided. All the VOCs and formaldehyde absorbed onto the VOC removal filter will be completely decomposed to CO₂ and H₂O before the atmosphere inside the air-tight space is released to the indoor environment.

Preferably, the decomposing step comprising: decomposing the VOCs adsorbed by the VOC filter in presence of photocatalyst provided in the air-tight space, the photocatalyst being independent of the VOC filter. For example, a meshed structure coated with photocatalyst can be provided in the air-tight space, thus photocatalytic oxidation is achieved by irradiating the meshed structure. The meshed structure can be arranged in vicinity of the light source/ ultrasonic source, so as to utilize the light/ultrasonic. With such a configuration, there is no need for integrating photocatalyst onto the absorbents of the filter.

According to another embodiment of the invention, the method further comprises a step of: releasing the VOCs adsorbed by the VOC filter into the air-tight space; the decomposing step comprises: decomposing the released VOCs by photocatalytic oxidation. Releasing the VOCs refers to escaping of VOCs by means of transferring energy (e.g. heat, light, electric and/or acoustic energy) to VOCs, which have already been absorbed onto the filter. The releasing step can be performed before the photocatalytic oxidation, and can also be performed during the photocatalytic oxidation. The combination of releasing step and decomposing step makes the photocatalytic oxidation more thorough, while the whole operation is time effective and free of operational difficulty.

Though the VOCs absorbed onto the VOC filter can be released by irradiating the absorbents of the filter or the meshed structure with light and/or ultrasonic, optionally, heat can also be applied to the VOC filter for assisting the releasing of the VOCs.

Preferably, the method further comprises vibrating the filter during the decomposing step. A mechanical wave (e.g. with an operation frequency of 20 to 1000 Hz) can be applied for vibrating or rotating the absorbents (such as granular activated carbon). Such mechanical wave is of high efficiency because the absorbents are generally granular.

Preferably, the vibrating step comprises: vibrating the filter with an ultrasonic source at a frequency higher than 16 kHz. The frequency of the ultrasonic can be chosen according to the power of the ultrasonic source and/or the mass of the absorbents. A frequency of the ultrasonic higher than 16 kHz ensures vibrating the absorbents and the synergistic effect.

According to yet another embodiment of the invention, the method further comprises steps of: detecting concentration of VOCs within the air-tight space during the decomposing step; and stopping the decomposing step if the detected concentration is lower than a preset concentration threshold.

According to still another embodiment of the invention, the method further comprises a step of: obtaining property of a photocatalyst used in the photocatalytic oxidation; configuring a light source according to the obtained property of the catalyst. The property of the photocatalyst can be obtained by input of the user, or by simply reading the tag of the VOC filter. By obtaining the exact property of the photocatalyst used in the photocatalytic oxidation, light and/or ultrasonic can be chosen for matching the photocatalyst. The specifics e.g. intensity and spectrum scope of the light source and/or the ultrasonic source depend on the catalysts coated on the absorbents. For instance, if the catalyst is TiO₂, since the absorption range is below 388 nm, therefore a UV light source will be used. If the catalyst is visible light catalyst, then a visible light source is provided.

Preferably, the air-tight space is provided with air. As described above, in the context, "air" refers to the mixture of gases that forms the Earth's atmosphere, which contains oxygen (O₂) and moisture (H₂O) as well. As shown in Fig. 2, these compositions can help the formation of O₂⁻ and OH·.

In a preferred embodiment of the invention, the method further comprising: providing reflector on/at the inner wall of the air-tight space, the reflector being able to reflect at least one of ultrasonic wave and light. With such a configuration, the photocatalytic oxidation can take full advantage of the ultrasonic wave and/or the light.

An air purifier comprising the device for regenerating a VOC filter according to any of the embodiments of the invention is also proposed, wherein the container comprises an air tight door, the air tight door is used to form airflow channel during operation of air filtration. With the advantageous mentioned above, such an air purifier can achieve regenerating a VOC filter without taking the VOC filter out of the air purifier, which means less complexity on the operation of the regeneration.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for regenerating a VOC filter, the method comprising steps of:
- arranging the VOC filter in an air-tight space; and
- decomposing VOCs adsorbed by the VOC filter by photocatalytic oxidation.

2. . The method of claim 1, wherein the decomposing step comprising:
- decomposing the VOCs adsorbed by the VOC filter in presence of photocatalyst provided in the air-tight space, the photocatalyst being independent of the VOC filter.

3. . The method of claim 1 or 2, wherein the method further comprises a step of:
- releasing the VOCs adsorbed by the VOC filter into the air-tight space; the decomposing step comprises:
- decomposing the released VOCs by photocatalytic oxidation.

4. . The method of claim 3, wherein the method further comprises vibrating the filter during the decomposing step.

5. . The method of claim 3, wherein the releasing step comprises:
- heating the VOC filter to release the absorbed VOCs.

6. . The method of claim 1, wherein the method further comprises steps of:
- detecting concentration of VOCs within the air-tight space during the decomposing step; and
- stopping the decomposing step if the detected concentration is lower than a preset concentration threshold.

7. . The method of claim 1, wherein the method further comprises a step of:
- obtaining property of a photocatalyst used in the photocatalytic oxidation;
- configuring a light source according to the obtained property of the catalyst.

8. The method of claim 1, wherein the air-tight space is provided with air.

9. . The method according to claim 1, the method further comprising:
- providing reflector on/at the inner wall of the air-tight space, the reflector being able to reflect at least one of ultrasonic wave and light.

10. . A device for regenerating a VOC filter, the device comprising:
a container with an air-tight space for containing the VOC filter;
a light source for irradiating absorbents of the VOC filter with light, and/or an ultrasonic source for irradiating absorbents of the VOC filter with ultrasonic, wherein the light and/or the ultrasonic enable(s) photocatalytic oxidation of photocatalyst provided on the absorbents; and
a detector for detecting concentration of VOCs within the air-tight space.

11. . The device according to claim 10, wherein photocatalyst is provided in the air-tight space, the photocatalyst being independent of the VOC filter.

12. . The device according to claim 10, wherein the device further comprises a vibrating unit for vibrating the absorbents of the VOC filter.

13. . The device according to claim 10 or 11, wherein the light is ultraviolet light.

14. . The device according to claim 10 or 11, wherein a reflector is provided on/at the inner wall of the air-tight space, the reflector being able to reflect at least one of ultrasonic wave and light.

15. . An air purifier comprising the device for regenerating a VOC filter according to any one of claims 10-14, wherein the container comprises an air tight door, the air tight door is used to form airflow channel during operation of air filtration.
